# EUROPÄISCHE PATENTSCHRIFT

(11) **EP 2 600 118 B1**
(45) Veröffentlichungstag und Bekanntmachung des Hinweises auf die Patenterteilung: **06.12.2017**
(21) Anmeldenummer: 12006610.5
(22) Anmeldetag: 20.09.2012
(51) Int. Cl.: G01F 1/32

(54) **Vortex-Durchflussmessgerät**
Vortex flow rate measurement device
Appareil de mesure de débit à vortex

(30) Priorität: 02.12.2011 DE 102011119981
(43) Veröffentlichungstag der Anmeldung: 05.06.2013
(73) Patentinhaber: KROHNE Messtechnik GmbH, 47058 Duisburg (DE)
(72) Erfinder: Gossner, Kai, 47506 Neukirchen-Vluyn (DE)
(74) Vertreter: Gesthuysen Patent- und Rechtsanwälte

(56) Entgegenhaltungen:
- DE-A1- 3 127 164
- DE-A1-102007 036 200
- US-A- 3 573 693
- US-A- 3 683 691
- US-A- 3 698 245
- US-A- 3 878 716

## Beschreibung

Die Erfindung betrifft ein Vortex-Durchflussmessgerät mit einem von einem Medium durchströmbaren Messrohr, einem in dem Messrohr vorgesehenen Staukörper zur Erzeugung von Wirbeln in dem Medium und mit einem im Wirkbereich des Staukörpers vorgesehenen Auslenkkörper, der durch die mit den Wirbeln im Medium einhergehenden Druckschwankungen auslenkbar ist.

Vortex-Durchflussmessgeräte sind seit langem bekannt, wobei das Messprinzip darauf beruht, dass sich in einem flüssigen oder gasförmigen Medium hinter einem Staukörper, der von dem Medium umströmt wird, eine Wirbelstraße ausbilden kann, die durch sich mit der Strömung fortbewegende, sich vom Staukörper abgelöste Wirbel gebildet ist. Die Frequenz, mit der sich Wirbel von dem Staukörper ablösen, ist von der Strömungsgeschwindigkeit abhängig, wobei dieser Zusammenhang unter gewissen Voraussetzungen nahezu linear ist. Jedenfalls stellt die Messung der Wirbelfrequenz ein geeignetes Mittel zur Bestimmung der Strömungsgeschwindigkeit des Mediums dar, weshalb indirekt - unter zusätzlicher Berücksichtigung von beispielsweise Druck und Temperatur - eine Bestimmung des Volumen- und Massedurchflusses durch die Wirbelfrequenzmessung möglich ist. Die in einer Wirbelstraße auftretenden Wirbel des Mediums führen zu lokalen Druckschwankungen, die sich auf den Auslenkkörper auswirken und von ihm detektiert werden. Bei dem Auslenkkörper kann es sich um einen Druckaufnehmer handeln, der beispielsweise mit Piezoelementen realisiert ist oder um kapazitive Drucksensoren, bei denen, wenn auch in geringem Umfang, ein Sensorelement eine Auslenkung erfährt. Wichtig ist lediglich, dass der Auslenkkörper so in der Wirbelstraße angeordnet ist, dass die von dem Staukörper erzeugten Wirbel - zumindest mittelbar - an dem Auslenkkörper vorbeiziehen und damit detektierbar sind. Dazu kann das Auslenkkörper stromabwärts hinter dem Staukörper vorgesehen sein, in diesem Fall sind Staukörper und Auslenkkörper tatsächlich körperlich getrennt realisiert. Der Auslenkkörper kann aber auch der Staukörper selbst sein oder in dem Staukörper realisiert sein, wenn beispielsweise bei der aus dem Stand der Technik bekannten Lösung mit Druckaufnehmern die Druckaufnehmer über oder in dem Staukörper angeordnet sind und derart über Kanäle die Druckschwankungen der Wirbelstraße mittelbar erfasst werden; in diesem Fall sind jedenfalls Staukörper und Auslenkkörper körperlich in einer Einheit realisiert.

Bei diesen aus dem Stand der Technik bekannten Methoden zur Erfassung der Bewegung des Auslenkkörpers, bei denen kapazitive oder induktive Effekte genutzt werden, bei denen mit Piezokeramiken gearbeitet wird oder bei denen auch optische Fasern zur Erfassung der Auslenkung eingesetzt werden, müssen die Auslenkkörper jeweils durch elektrische oder optische Leitungen kontaktiert werden, wobei diese Leitungen aus dem mit dem Medium erfüllten Raum durch die Messrohrwandung bzw. das Gehäuse des Vortex-Durchflussmessgeräts in einen mediumfreien Raum, üblicherweise zu einer Auswerteelektronik, geführt werden müssen. Diese Durchführungen müssen mit sehr aufwendigen Dichtungen realisiert werden, da - je nach Anwendungsfall - eine hohe Druck- und/oder Temperaturstabilität erreicht werden muss (mehrere 100 bar, mehrere 100 °C). Die US 3 698 245 offenbart ein Vortex-Durchflussmessgerät, bei dem eine Auslenkung des Auslenkkörpers erfasst werden kann, ohne dass dazu der Auslenkkörper über elektrische und/oder optische Zuleitungen kontaktiert werden muss, bei dem also keine Notwendigkeit besteht, aufwendige Messrohr- und/oder Gehäusedurchführungen zu realisieren. Der aus einem magnetischen Material bestehende Auslenkkörper befindet sich dabei zwischen zwei stabförmigen Permanentmagneten, die jeweils von einer Spule umgeben sind. Die Spulen detektieren die elektrischen Signale, die durch eine Änderung des Abstands zwischen dem jeweiligen Permanentmagneten und dem Auslenkkörper erzeugt werden. Aufgabe der vorliegenden Erfindung ist es, hierzu eine alternative Ausgestaltung anzugeben. Die zuvor hergeleitete und dargestellte Aufgabe ist zunächst bei dem Vortex Durchflussmessgerät, von dem die vorliegende Erfindung ausgeht, dadurch gelöst, dass wenigstens eine außerhalb des Messrohrs angeordnete Magnetfelderzeugungsvorrichtung im Bereich des Auslenkkörpers ein Magnetfeld erzeugt, dass der Auslenkkörper eine vom Medium verschiedene magnetische Permeabilität aufweist und das Magnetfeld beeinflusst und dass wenigstens eine Magnetfelderfassungsvorrichtung zur Erfassung des Magnetfeldes im Bereich des Auslenkkörpers außerhalb des Messrohrs angeordnet ist. Durch die erfindungsgemäße Konstruktion des Vortex-Durchflussmessgeräts ist ein leitungsmäßiger Zugang zum Mediumraum des Vortex-Durchflussmessgeräts nicht mehr erforderlich. Wichtig ist bei dem erfindungsgemäßen Vortex-Durchflussmessgerät lediglich, dass die außerhalb des Messrohrs angeordnete Magnetfelderzeugungsvorrichtung ein Magnetfeld erzeugt, dass sich jedenfalls auch auf den Bereich des Auslenkkörpers erstreckt, so dass eine Bewegung des Auslenkkörpers das Magnetfeld beeinflusst. Eine solche Beeinflussung des Magnetfeldes ist nicht nur lokal im Bereich des Auslenkkörpers erkennbar, sondern auch außerhalb des Messrohrs und kann dort durch eine außerhalb des Messrohrs angeordnete Magnetfelderfassungsvorrichtung erfasst und dann ausgewertet werden. Das Messrohr darf nicht so ausgestaltet sein, dass es eine magnetische Abschirmung darstellen würde, vorzugsweise besteht es aus einem Material mit einer Permeabilitätszahl nahe 1.

Gemäß der Erfindung ist vorgesehen, dass die Magnetfelderzeugungsvorrichtung wenigstens eine den Umfang des Messrohrs umgebende erste Anregungsspule aufweist, so dass die erste Anregungsspule bei Beaufschlagung mit einem Strom ein in axialer Erstreckung des Messrohrs orientiertes Magnetfeld erzeugt. Die Windungen der ersten Anregungsspule können dabei direkt auf das Messrohr aufgebracht sein, die Windungen können aber beispielsweise auch in einer separaten Rohrwandung - beispielsweise vergossen - vorgesehen sein, wobei dieses die erste Anregungsspule umfassende Rohr dann auf das Messrohr aufgeschoben werden kann. Weiterhin weist die Magnetfelderzeugungsvorrichtung benachbart zur ersten Anregungsspule zusätzlich eine den Umfang des Messrohrs umgebende zweite Anregungsspule auf, wobei auch die zweite Anregungsspule bei Beaufschlagung mit einem Strom ein in axialer Erstreckung des Messrohrs orientiertes Magnetfeld erzeugt. Insbesondere sind dann die erste Anregungsspule und die zweite Anregungsspule überlappungsfrei nebeneinander auf dem Messrohr angeordnet. Der Auslenkkörper innerhalb des Magnetfeldes und die erste Anregungsspule und/oder die zweite Anregungsspule sind jeweils so zueinander angeordnet, dass eine möglichst starke Beeinflussung des von der Magnetfelderzeugungsvorrichtung hervorgerufenen Magnetfeldes durch den Auslenkkörper bewirkt werden kann. Da gemäß der Erfindung die Magnetfelderzeugungsvorrichtung sowohl eine erste Anregungsspule wie auch eine zweite Anregungsspule aufweist, die benachbart zueinander angeordnet sind, lässt sich ein zur Detektion einer Auslenkung des Auslenkkörpers besonders gut geeignetes magnetisches Feld dadurch erzeugen, dass die erste Anregungsspule und die zweite Anregungsspule bei Beaufschlagung mit einem Strom einander entgegengerichtete magnetische Felder erzeugen, insbesondere wobei das Auslenkmittel dann in einem im Wesentlichen feldfreien Bereich zwischen der ersten Anregungsspule und der zweiten Anregungsspule angeordnet ist. Es ist ohne Weiteres einleuchtend, dass sich entgegengerichtete magnetische Felder der ersten Anregungsspule und der zweiten Anregungsspule gegenseitig schwächen, insbesondere in dem Bereich schwächen, in dem die Spulen unmittelbar benachbart zueinander sind. Die Spulen bzw. die Bestromung der Spulen kann so ausgelegt werden, dass die magnetische Feldstärke im Bereich des Auslenkkörpers in etwa oder auch exakt zu Null wird. Bei einer Bewegung des Auslenkkörpers wird dieses empfindliche Gleichgewicht gestört, wobei die Störung wiederum detektierbar und damit auch die Auslenkung des Auslenkkörpers erfassbar ist.

Bei einer bevorzugten Ausgestaltung der Erfindung lassen sich die einander entgegengerichteten magnetischen Felder der ersten Anregungsspule und der zweiten Anregungsspule auf besonders einfache Weise erzeugen, indem die erste Anregungsspule und die zweite Anregungsspule elektrisch miteinander verbunden sind und unterschiedliche Wickelrichtungen aufweisen, wobei vorzugsweise die erste Anregungsspule und die zweite Anregungsspule eine gleiche Anzahl von Wicklungen aufweisen, womit die erste Anregungsspule und die zweite Anregungsspule aufgrund der erzwungenen gleichen Bestromung auch jeweils gleiche magnetische Feldstärken hervorrufen.

Es gibt verschiedene Möglichkeiten, die Magnetfelderfassungsvorrichtung zur Erfassung des Magnetfeldes auszugestalten, prinzipiell sind jegliche Magnetfeldsensoren denkbar, sofern ihre Empfindlichkeit ausreichend ist. Vorzugsweise umfasst die Magnetfelderfassungsvorrichtung wenigstens eine erste Detektorspule, die so angeordnet ist, dass der von der Auslenkvorrichtung beeinflusste Teil des Magnetfeldes zumindest teilweise die erste Detektorspule durchsetzt. Diese erste Detektorspule kann eine zu der ersten und/oder zweiten Anregungsspule verschiedene Spule sein, sie kann aber auch mit der ersten Anregungsspule und/oder der zweiten Anregungsspule identisch sein. Wenn beispielsweise der ersten Anregungsspule ein definierter Strom bzw. Stromverlauf aufgeprägt wird, dann führte eine Veränderung des Magnetfeldes bzw. des magnetischen Flusses durch den Auslenkkörper in der ersten Anregungsspule und/oder der zweiten Anregungsspule zu einer Änderung der Klemmenspannung, wobei durch Auswertung dieser Klemmenspannung die Bewegung des Auslenkkörpers detektierbar ist.

Gemäß einer vorteilhaften Weiterbildung des erfindungsgemäßen Vortex-Durchflussmessgeräts ist die erste Detektorspule jedoch als eine separate Spule ausgeführt und konzentrisch um oder in der ersten Anregungsspule und/oder um oder in der zweiten Anregungsspule angeordnet. Auch hier ist es wieder möglich, die Detektorspule unter Voraussetzung einer geeigneten elektrischen Isolierung direkt auf oder unter der ersten Anregungsspule und/oder der zweiten Anregungsspule zu wickeln, denkbar ist aber auch, die erste Detektorspule in einer eigenen Rohrwandung vorzusehen. Entsprechend der Verwendung einer ersten Anregungsspule und einer zweiten Anregungsspule bei der Magnetfelderzeugungsvorrichtung ist bei einer weiteren vorteilhaften Ausgestaltung vorgesehen, dass die Magnetfelderfassungsvorrichtung eine weitere, zweite Detektorspule umfasst, wobei die erste Detektorspule und die zweite Detektorspule koaxial und axial benachbart zu der ersten Anregungsspule und/oder der zweiten Anregungsspule angeordnet sind.

Vorzugsweise ist zur Erzeugung des Magnetfeldes eine Anregungsvorrichtung vorgesehen, die in einer Weiterentwicklung der Erfindung die erste Anregungsspule und/oder die zweite Anregungsspule mit einem sinusförmigen Strom konstanter Frequenz und konstanter Amplitude beaufschlagt, wobei vorzugsweise die verwendete Frequenz jenseits des Frequenzbereiches der zu erwartenden Wirbelfrequenzen liegt, vorzugsweise ist die Frequenz des sinusförmigen Stroms um wenigstens eine Zehnerpotenz vorzugsweise jedoch um mehr als zwei Zehnerpotenzen größer als die höchste zu erwartende Wirbelfrequenz im Medium.

Im Einzelnen gibt es nun eine Vielzahl von Möglichkeiten, das erfindungsgemäße Vortex-Durchflussmessgerät auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: ein erfindungsgemäßes Vortex-Durchflussmessgerät in schematischer Schnittdarstell ung,
- Fig. 2: das Messrohr eines erfindungsgemäßen Vortex-Durchflussmessgeräts mit Anregungsspule in schematischer perspektivischer Darstellung,
- Fig. 3: die Darstellung des Messrohrs gemäß Fig. 2 im Teilschnitt,
- Fig. 4: das Messrohr gemäß den Figuren 2 und 3 in Seitenansicht,
- Fig. 5: ein weiteres Ausführungsbeispiel eines erfindungsgemäßen Vortex-Durchflussmessgeräts in schematischer Schnittdarstellung und
- Fig. 6: ein letztes Ausführungsbeispiel eines erfindungsgemäßen Vortex-Durchflussmessgeräts in schematischer Schnittdarstellung.

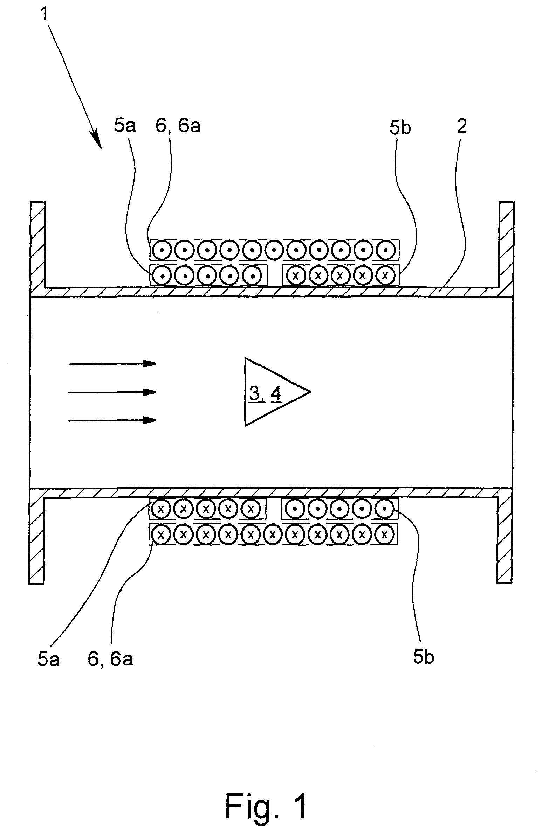

In den Fig. 1, 5 und 6 sind Schnittdarstellungen verschiedener Ausführungsbeispiele erfindungsgemäßer Vortex-Durchflussmessgeräte 1 dargestellt. Die Vortex-Durchflussmessgeräte 1 weisen ein von einem Medium durchströmbares Messrohr 2 auf, die Strömungsrichtung ist durch Pfeile angedeutet, und einen in dem Messrohr 2 jeweils vorgesehenen Staukörper 3 zur Erzeugung von Wirbeln in dem Medium. In den dargestellten Ausführungsbeispielen ist der Staukörper 3 identisch mit einem Auslenkkörper 4, der sich infolgedessen im Wirkbereich des Staukörpers 3 befindet. Die von dem Staukörper 3 verursachten und in den Figuren nicht gesondert dargestellten Wirbel erzeugen am Entstehungsort Druckschwankungen, so dass der Auslenkkörper 4 durch die mit den Wirbeln im Medium einhergehenden Druckschwankungen ausgelenkt wird. Der Auslenkkörper 4 ist in sich so ausgestaltet bzw. ist so an dem Messrohr 2 befestigt, dass er durch die Druckschwankungen in der Wirbelstraße eine Auslenkung erfährt.

Außerhalb des Messrohrs 2 ist eine Magnetfelderzeugungsvorrichtung 5a, 5b vorgesehen, mit der im Bereich des Auslenkkörpers 4 ein Magnetfeld erzeugbar ist. Das Material des Auslenkkörpers 4 ist so gewählt, dass er eine vom Medium verschiedene magnetische Permeabilität aufweist und das Magnetfeld vom Medium unterscheidbar beeinflusst. Bei einer Bewegung des Auslenkkörpers 4 im Medium ändert sich auch die Beeinflussung des Magnetfeldes, wobei diese Änderung des Magnetfeldes durch die ebenfalls außerhalb des Messrohres 2 angeordnete Magnetfelderfassungsvorrichtung 6 erfasst wird. Die Magnetfelderzeugungsvorrichtung 5 weist eine den Umfang des Messrohrs umgebende erste Anregungsspule 5a auf, und sie weist ebenfalls eine benachbart zur ersten Anregungsspule 5a den Umfang des Messrohrs 2 umgebende zweite Anregungsspule 5b auf. Sowohl die erste Anregungsspule 5a wie auch die zweite Anregungsspule 5b erzeugen bei Beaufschlagung mit einem Strom ein in axialer Erstreckung des Messrohrs 2 orientiertes Magnetfeld; dies haben alle in den Figuren dargestellten Ausführungsbeispiele gemein.

In den Figuren ist im Einzelnen nicht dargestellt, wie die erste Anregungsspule 5a und die zweite Anregungsspule 5b mit einer Ansteuerschaltung zur geeigneten Bestromung der Anregungsspulen 5a, 5b verbunden sind, weil dies für die der Erfindung zugrunde liegende Überlegung nicht ausschlaggebend ist. Wichtig ist bei den dargestellten Ausführungsbeispielen jedoch, dass das Messrohr 2 bzw. das Gehäuse des Vortex-Durchflussmessgeräts 1 nicht durchbrochen werden muss, um die Bewegung des Auslenkkörpers 4 detektieren zu können, das Messrohr 2 kann gänzlich unbeschädigt bleiben, es sind keinerlei Durchführungen für Sensoren erforderlich.

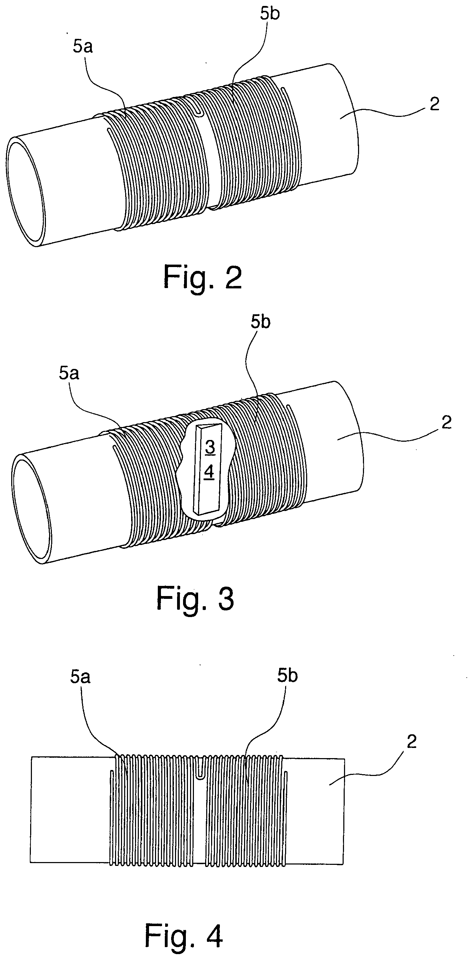

In den dargestellten Ausführungsbeispielen erzeugen die erste Anregungsspule 5a und die zweite Anregungsspule 5b bei Beaufschlagung mit einem Strom einander entgegengerichtete magnetische Felder, wobei der Auslenkkörper 4 in einem im Wesentlichen feldfreien Bereich zwischen der ersten Anregungsspule 5a und der zweiten Anregungsspule 5b angeordnet ist. Wie in den Figuren 2, 3 und 4 in teilweise perspektivischen Darstellungen erläutert ist, sind die erste Anregungsspule 5a und die zweite Anregungsspule 5b elektrisch miteinander verbunden, nämlich in dem Bereich, in dem sie unmittelbar benachbart sind, wozu auf die mittig angeordnete Leiterschlaufe in den Fig. 2 und 4 hingewiesen wird, und sie weisen unterschiedliche Wickelrichtungen bei gleicher Anzahl von Wicklungen auf. Dies hat den Vorteil, dass sie von einem identischen Strom durchflossen werden können und bei der in den Figuren dargestellten benachbarten Anordnung automatisch in ihrem Verbindungsbereich aufgrund der symmetrischen Anordnung einen praktisch feldfreien Raum erzeugen. Die Einzelfelder weisen in diesem Bereich Inhomogenitäten auf, so dass bei einer Auslenkung des Auslenkkörpers 4 eine magnetische Asymmetrie hervorgerufen wird, die ohne Weiteres außerhalb des Messrohres 2 detektierbar ist. Die so geschaltete erste Anregungsspule 5a und die zweite Anregungsspule 5b bilden hier eine Differentialspule.

In dem Ausführungsbeispiel gemäß Fig. 1 umfasst die Magnetfelderfassungsvorrichtung 6 eine erste Detektorspule 6a, wobei die erste Detektorspule 6a so angeordnet ist, dass der von dem Auslenkkörper 4 beeinflusste Teil des Magnetfeldes auch die erste Detektorspule 6a durchsetzt. Wird das Magnetfeld innerhalb der Detektorspule 6a verändert bzw. wird der magnetisch Fluss innerhalb der Detektorspule 6a verändert, ist diese Veränderung an den hier nicht ausdrücklich dargestellten Klemmen der Detektorspule 6a als eine induzierte Spannung erfassbar. Bei dem Ausführungsbeispiel gemäß Fig. 1 ist die erste Detektorspule 6a konzentrisch um die erste Anregungsspule 5a und um die zweite Anregungsspule 5b angeordnet, so dass von dem Auslenkkörper 4 verursachte magnetische Flussänderungen zwingend von der Detektorspule 6a erfasst werden.

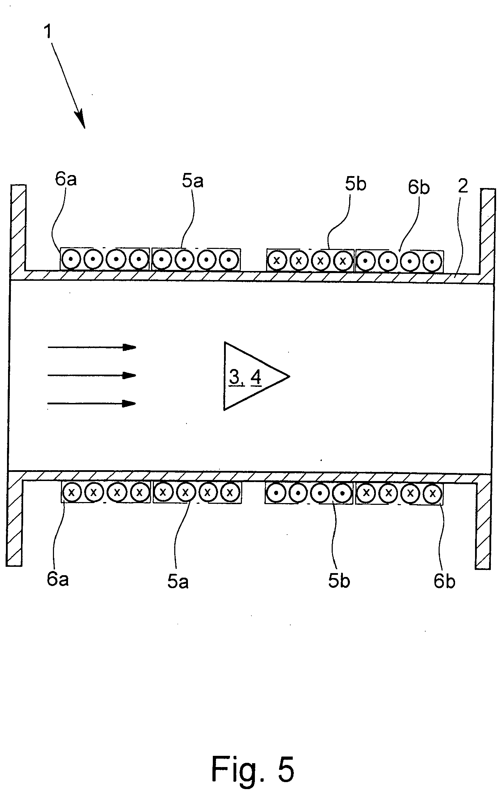

Bei dem Ausführungsbeispiel gemäß Fig. 5 umfasst die Magnetfelderfassungsvorrichtung 6 eine weitere, zweite Detektorspule 6b, wobei die erste Detektorspule 6a und die zweite Detektorspule 6b koaxial und axial benachbart zu der ersten Anregungsspule 5a und der zweiten Anregungsspule 5b angeordnet sind, wobei hier von links nach rechts gesehen, also in Richtung des angedeuteten Mediumflusses die Anordnung erste Detektorspule 6a, erste Anregungsspule 5a, zweite Anregungsspule 5b und zweite Detektorspule 6b realisiert ist. Auf diese Art und Weise können Spulen einheitlichen Durchmessers verwendet werden.

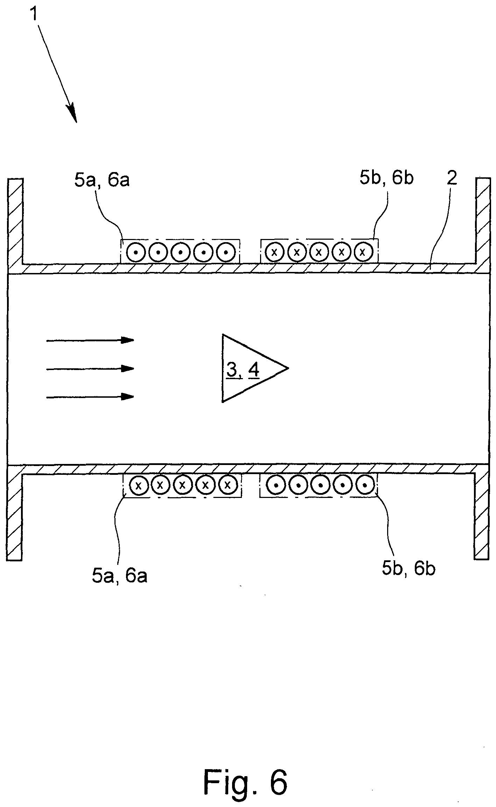

Bei dem Ausführungsbeispiel gemäß Fig. 6 ist die erste Anregungsspule 5a identisch mit der ersten Detektorspule 6a und ist die zweite Anregungsspule 5b identisch mit der zweiten Detektorspule 6b. Die erste Anregungsspule 5a und die zweite Anregungsspule 5b sind auch hier seriell zusammengeschaltet und werden von einer Anregungsvorrichtung, die hier nicht dargestellt ist, von einem definierten Strom beaufschlagt, also von einem Strom definierter Form, ggf. Frequenz und Amplitude. Bei Bewegung des Auslenkkörpers 4 in dem Magnetfeld und bei einer dadurch bewirkten Flussänderung wird eine Spannung in der ersten Anregungsspule 5a und der zweiten Anregungsspule 5b induziert, die deshalb gleichfalls als erste Detektorspule 6a und zweite Detektorspule 6b wirken. Durch Auswertung der Klemmenspannung lässt sich ohne Weiteres auf die Bewegung des Auslenkkörpers 4 rückschließen. In dem vorliegenden Ausführungsbeispiel werden die erste Anregungsspule 5a und die zweite Anregungsspule 5b durch die Anregungsvorrichtung mit einem sinusförmigen Strom konstanter Frequenz von 100 kHz beaufschlagt und die induzierte Spannung in den Detektorspulen 6a, 6b gemessen. Durch den großen Frequenzabstand von Anregungssignal zu Erfassungssignal kann durch geeignete Filterung die Wirbelfrequenz sehr einfach aus der induzierten Spannung abgeleitet werden.

## Patentansprüche

1. Vortex-Durchflussmessgerät (1) mit einem von einem Medium durchströmbaren Messrohr (2), einem in dem Messrohr (2) vorgesehenen Staukörper (3) zur Erzeugung von Wirbeln in dem Medium und mit einem im Wirkbereich des Staukörpers (3) vorgesehenen Auslenkkörper (4), der durch die mit den Wirbeln im Medium einhergehenden Druckschwankungen auslenkbar ist, wobei wenigstens eine außerhalb des Messrohrs (2) angeordnete Magnetfelderzeugungsvorrichtung (5a, 5b) im Bereich des Auslenkkörpers (4) ein Magnetfeld erzeugt, wobei der Auslenkkörper (4) eine vom Medium verschiedene magnetische Permeabilität aufweist und das Magnetfeld beeinflusst und wobei wenigstens eine Magnetfelderfassungsvorrichtung (6, 6a, 6b) zur Erfassung des Magnetfeldes im Bereich des Auslenkkörpers (4) außerhalb des Messrohrs (2) angeordnet ist,
**dadurch gekennzeichnet,**
**dass** die Magnetfelderzeugungsvorrichtung (5a, 5b) wenigstens eine den Umfang des Messrohrs (2) umgebende erste Anregungsspule (5a) aufweist, wobei die erste Anregungsspule (5a) bei Beaufschlagung mit einem Strom ein in axialer Erstreckung des Messrohrs (2) orientiertes Magnetfeld erzeugt, dass die Magnetfelderzeugungsvorrichtung (5a, 5b) benachbart zur ersten Anregungsspule (5a) zusätzlich eine den Umfang des Messrohrs (2) umgebende zweite Anregungsspule (5b) aufweist, wobei die zweite Anregungsspule (5b) bei Beaufschlagung mit einem Strom ein in axialer Erstreckung des Messrohrs (2) orientiertes Magnetfeld erzeugt.

2. Vortex-Durchflussmessgerät (1) nach Anspruch 1, **dadurch gekennzeichnet, dass** die erste Anregungsspule (5a) und die zweite Anregungsspule (5b) bei Beaufschlagung mit einem Strom einander entgegengerichtete magnetische Felder erzeugen, insbesondere wobei der Auslenkkörper (4) in einem feldfreien Bereich zwischen der ersten Anregungsspule (5a) und der zweiten Anregungsspule (5b) angeordnet ist.

3. Vortex-Durchflussmessgerät (1) nach Anspruch 2, **dadurch gekennzeichnet, dass** die erste Anregungsspule (5a) und die zweite Anregungsspule (5b) elektrisch miteinander verbunden sind und unterschiedliche Wickelrichtungen aufweisen, insbesondere wobei die erste Anregungsspule (5a) und die zweite Anregungsspule (5b) eine gleiche Anzahl von Wicklungen aufweisen.

4. Vortex-Durchflussmessgerät (1) nach einem der Ansprüche 1 bis 3, **dadurch gekennzeichnet, dass** die Magnetfelderfassungsvorrichtung (6) zur Erfassung des Magnetfeldes wenigstens eine erste Detektorspule (6a) umfasst und die erste Detektorspule (6a) so angeordnet ist, dass der von dem Auslenkkörper (4) beeinflusste Teil des Magnetfeldes zumindest teilweise die erste Detektorspule (6a) durchsetzt.

5. Vortex-Durchflussmessgerät (1) nach Anspruch 4, **dadurch gekennzeichnet, dass** die erste Detektorspule (6a) konzentrisch um oder in der ersten Anregungsspule (5a) und/oder um oder in der zweiten Anregungsspule (5b) angeordnet ist.

6. Vortex-Durchflussmessgerät (1) nach Anspruch 4, **dadurch gekennzeichnet, dass** die Magnetfelderfassungsvorrichtung (6) zur Erfassung des Magnetfeldes wenigstens eine weitere, zweite Detektorspule (6b) umfasst, wobei die erste Detektorspule (6a) und die zweite Detektorspule (6b) koaxial und axial benachbart zu der ersten Anregungsspule (5a) und/oder der zweiten Anregungsspule (5b) angeordnet sind, insbesondere axial die Anordnung erste Detektorspule (6a), erste Anregungsspule (5a) und/oder zweite Anregungsspule (5b) und zweite Detektorspule (6b) realisiert ist.

7. Vortex-Durchflussmessgerät (1) nach einem der Ansprüche 1 bis 6, **dadurch gekennzeichnet, dass** die erste Anregungsspule (5a) und/oder die zweite Anregungsspule (5b) von einer Anregungsvorrichtung mit einem sinusförmigen Strom konstanter Frequenz und konstanter Amplitude beaufschlagt wird, insbesondere mit einer Frequenz, die um wenigstens eine Zehnerpotenz, bevorzugt wenigstens um zwei Zehnerpotenzen größer ist als die höchste zu erwartende Wirbelfrequenz im Medium.

## Claims

1. Vortex flow meter (1) having a measurement tube (2) through which a medium can flow, a bluff body (3) provided in the measurement tube (2) for generating vortices in the medium, and comprising a deflection body (4) provided in an effective range of the bluff body (3) and deflectable by pressure variations associated with vortices generated in the medium, wherein at least one magnetic field generating device (5a, 5b) arranged outside of the measurement tube (2) generates a magnetic field in a region of the deflection body (4), wherein the deflection body (4) has a magnetic permeability that is different than that of the medium so as influence the magnetic field, and wherein at least one magnetic field registering device (6, 6a, 6b) for registering a magnetic field in the region of the deflection body (4) is arranged outside of the measurement tube (2),
**characterized in**
**that** the magnetic field generating device (5a, 5b) comprises at least a first excitation coil (5a) circumferentially surrounding the measurement tube (2), wherein the first excitation coil (5a) generates a magnetic field oriented in an axial direction of the measurement tube (2) when a current is applied to it, that the magnetic field generating device (5a, 5b) additionally comprises a second excitation coil (5b) circumferentially surrounding the measurement tube (2) next to the first excitation coil (5a), wherein the second excitation coil (5b) generates a magnetic field oriented in an axial direction of the measurement tube (2) when a current is applied to it.

2. Vortex flow meter (1) according to claim 1, **characterized in that** the first excitation coil (5a) and the second excitation coil (5b) generate magnetic fields directed opposite to one another when a current is applied to them, in particular wherein the deflection body (4) is arranged in a field-free region between the first excitation coil (5a) and the second excitation coil (5b).

3. Vortex flow meter (1) according to claim 2, **characterized in that** the first excitation coil (5a) and the second excitation coil (5b) are electrically connected to one another and have different winding directions, in particular wherein the first excitation coil (5a) and the second excitation coil (5b) have an equal number of turns.

4. Vortex flow meter (1) according to any one of claims 1 to 3, **characterized in that** the magnetic field registering device (6) comprises at least a first detector coil (6a) for registering the magnetic field, and the first detector coil (6a) is arranged so that a part of the magnetic field influenced by the deflection body (4) passes at least partially through the first detector coil (6a).

5. Vortex flow meter (1) according to claim 4, **characterized in that** the first detector coil (6a) is arranged concentrically around or in the first excitation coil (5a) and/or the second excitation coil (5b).

6. Vortex flow meter (1) according to claim 4, **characterized in that** the magnetic field registering device (6) comprises at least one additional second detector coil (6b) for registering the magnetic field, wherein the first detector coil (6a) and the second detector coil (6b) are arranged coaxially and axially next to the first excitation coil (5a) and/or the second excitation coil (5b), in particular is implemented axial to the arrangement of the first detector coil (6a), first excitation coil (5a) and/or second excitation coil (5b) and second detector coil (6b).

7. Vortex flow meter (1) according to any one of claims 1 to 6, **characterized in that** an excitation device applies a sinusoidal current of constant frequency and constant amplitude to the first excitation coil (5a) and/or the second excitation coil (5b), in particular with a frequency which is at least one power of ten, preferably at least two powers of ten greater than a highest vortex frequency to be expected in the medium.

## Revendications

1. Débitmètre à vortex (1), comprenant un tube de mesure (2) qui peut être traversé par un courant de fluide, un corps de retenue (3) disposé dans le tube de mesure (2) pour générer des tourbillons dans le fluide et comprenant un corps déflecteur (4) disposé dans la zone du corps de retenue (3), lequel peut être dévié par les fluctuations de pression qui accompagnent les tourbillons dans le fluide, au moins un dispositif générateur de champ magnétique (5a, 5b), disposé à l'extérieur du tube de mesure (2), générant un champ magnétique dans la zone du corps déflecteur (4), le corps déflecteur (4) présentant une perméabilité magnétique différente de celle du fluide et influençant le champ magnétique et au moins un dispositif de détection de champ magnétique (6, 6a, 6b) destiné à détecter le champ magnétique étant disposé dans la zone du corps déflecteur (4) à l'extérieur du tube de mesure (2),
caractérisé en que
le dispositif générateur de champ magnétique (5a, 5b) possède au moins une première bobine d'excitation (5a) qui entoure la circonférence du tube de mesure (2), la première bobine d'excitation (5a), lorsqu'elle est alimentée avec un courant, générant un champ magnétique orienté dans l'extension axiale du tube de mesure (2), en ce que le dispositif générateur de champ magnétique (5a, 5b) possède en plus, de manière adjacente à la première bobine d'excitation (5a), une deuxième bobine d'excitation (5b) qui entoure la circonférence du tube de mesure (2), la deuxième bobine d'excitation (5b), lorsqu'elle est alimentée avec un courant, générant un champ magnétique orienté dans l'extension axiale du tube de mesure (2).

2. Débitmètre à vortex (1) selon la revendication 1, **caractérisé en ce que** la première bobine d'excitation (5a) et la deuxième bobine d'excitation (5b), lorsqu'elles sont alimentées avec un courant, génèrent des champs magnétiques opposés l'un à l'autre, le corps déflecteur (4) étant notamment disposé dans une zone dépourvue de champ entre la première bobine d'excitation (5a) et la deuxième bobine d'excitation (5b).

3. Débitmètre à vortex (1) selon la revendication 2, **caractérisé en ce que** la première bobine d'excitation (5a) et la deuxième bobine d'excitation (5b) sont reliées électriquement l'une à l'autre et possèdent des sens d'enroulement différents, en particulier la première bobine d'excitation (5a) et la deuxième bobine d'excitation (5b) possédant un nombre d'enroulements identique.

4. Débitmètre à vortex (1) selon l'une des revendications 1 à 3, **caractérisé en ce que** le dispositif de détection de champ magnétique (6) comprend, pour la détection du champ magnétique, au moins une première bobine de détection (6a) et la première bobine de détection (6a) est disposée de telle sorte que la partie du champ magnétique influencée par le corps déflecteur (4) pénètre au moins partiellement dans la première bobine de détection (6a).

5. Débitmètre à vortex (1) selon la revendication 4, **caractérisé en ce que** la première bobine de détection (6a) est disposée de manière concentrique autour ou dans la première bobine d'excitation (5a) et/ou autour ou dans la deuxième bobine d'excitation (5b).

6. Débitmètre à vortex (1) selon la revendication 4, **caractérisé en ce que** le dispositif de détection de champ magnétique (6) comprend, pour la détection du champ magnétique, au moins une autre, deuxième bobine de détection (6b), la première bobine de détection (6a) et la deuxième bobine de détection (6b) étant disposées de manière coaxiale et adjacentes dans le sens axial par rapport à la première bobine d'excitation (5a) et/ou la deuxième bobine d'excitation (5b), l'arrangement de la première bobine de détection (6a), de la première bobine d'excitation (5a) et/ou de la deuxième bobine d'excitation (5b) et de la deuxième bobine de détection (6b) étant notamment réalisé axial.

7. Débitmètre à vortex (1) selon l'une des revendications 1 à 6, **caractérisé en ce que** la première bobine d'excitation (5a) et/ou la deuxième bobine d'excitation (5b) sont alimentées par un dispositif d'excitation avec un courant sinusoïdal à fréquence constante et à amplitude constante, notamment avec une fréquence qui est supérieure d'au moins une puissance de dix, de préférence d'au moins deux puissances de dix à la fréquence de tourbillonnement la plus élevée à attendre dans le fluide.
